(19) **Europäisches Patentamt / European Patent Office / Office européen des brevets**

(11) **EP 2 952 935 B1**

(12) **EUROPEAN PATENT SPECIFICATION**

(45) Date of publication and mention of the grant of the patent:
**28.06.2023 Bulletin 2023/26**

(21) Application number: **15171061.3**

(22) Date of filing: **08.06.2015**

(51) International Patent Classification (IPC):
**G01V 1/30** *(2006.01)*    **G06T 5/00** *(2006.01)*
**G06T 5/10** *(2006.01)*

(52) Cooperative Patent Classification (CPC):
**G01V 1/301; G06T 5/002; G06T 5/10;**
G01V 2210/43; G06T 2207/20064

(54) **GENERALIZED SPECTRAL DECOMPOSITION**

VERALLGEMEINERTE SPEKTRALZERLEGUNG

DÉCOMPOSITION SPECTRALE GÉNÉRALISÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.06.2014 US 201462008983 P**
**31.03.2015 US 201514674585**

(43) Date of publication of application:
**09.12.2015 Bulletin 2015/50**

(73) Proprietors:
• **Services Pétroliers Schlumberger**
**75007 Paris (FR)**
Designated Contracting States:
**FR**
• **GeoQuest Systems B.V.**
**2586 BJ 's-Gravenhage (NL)**
Designated Contracting States:
**AL AT BE BG CH CY CZ DE DK EE ES FI GB GR HR HU IE IS IT LI LT LU LV MC MK MT NL NO PL PT RO RS SE SI SK SM TR**

(72) Inventors:
• **Aarre, Victor**
**4010 Stavanger (NO)**
• **Hoekstra, Edo**
**4047 Hafrsfjord (NO)**

(74) Representative: **Schlumberger Intellectual Property Department**
**Parkstraat 83**
**2514 JG Den Haag (NL)**

(56) References cited:
• **JEROME GILLES: "Empirical Wavelet Transform", IEEE TRANSACTIONS ON SIGNAL PROCESSING, IEEE SERVICE CENTER, NEW YORK, NY, US, vol. 61, no. 16, 1 August 2013 (2013-08-01), pages 3999-4010, XP011521513, ISSN: 1053-587X, DOI: 10.1109/TSP.2013.2265222**
• **H Kazemeini: "P243 Application of the Continuous Wavelet Transform Decomposition to Channel Deposits and Gas Detection at Ketzin, Germany", , 11 June 2007 (2007-06-11), pages 11-14, XP055222792, Retrieved from the Internet: URL:http://onlinelibrary.wiley.com/doi/10.1111/j.1365-2478.2008.00723.x/full [retrieved on 2015-10-21]**
• **KRITSKI A ET AL: "ADAPTIVE WAVELETS FOR ANALYZING DISPERSIVE SEISMIC WAVES", GEOPHYSICS, SOCIETY OF EXPLORATION GEOPHYSICISTS, US, vol. 72, no. 1, 1 January 2007 (2007-01-01), pages V01-V11, XP001503468, ISSN: 0016-8033, DOI: 10.1190/1.2374799**

## Description

## Background

In seismic exploration, spectral decomposition refers to any method that produces a continuous time-frequency analysis of a seismic trace. Thus, a frequency spectrum is output for each time sample of the seismic trace. Spectral decomposition has been used for a variety of applications including layer thickness determination, stratigraphic visualization, and direct hydrocarbon detection.

Spectral decomposition is a non-unique process, and thus a single seismic trace may produce various time-frequency analyses. There are a variety of spectral decomposition methods including the short-window Fourier Transform (SWFT), discrete Fourier Transform (DFT), maximum entropy method (MEM), continuous wavelet transform (CWT), and matching pursuit decomposition (MPD). Each method has advantages and disadvantages, and may be suited for different applications.

The DFT and MEM methods involve explicit use of windows, and the nature of the windowing may affect the temporal and spectral resolution of the output. In general, the DFT method is preferred for evaluating the spectral characteristics of long windows containing many reflection events, with the spectra generally dominated by the spacing between events. The MEM method is often difficult to parameterize and may produce unstable results.

The SWFT method uses a long wavelet. The length may be given through the window size for the Fourier Transform and, hence, with a narrow amplitude frequency spectrum and poor vertical resolution. The CWT uses a short wavelet, typically of a Morlet/Gabor shape. The Morlet/Gabor wavelet is essentially an infinite cosine wave, of a given frequency, multiplied with a Gaussian windowing operator of a given wavelet length (i.e., the "scale" parameter). The frequency of the carrier wavelet is defined by this scale, ensuring a similar shape of the wavelet across octave ranges. Due to this, relatively short wavelet length temporal resolution may be high, but poorer resolution may be found in the spectral domain.

The paper "Application of the Continuous Wavelet Transform Decomposition to Channel Deposits and Gas Detection at Ketzin, Germany" by H. Kazemeini, C. Juhlin, K. Zinck-Jorgensen and B. Norden (EAGE 69th Conference and Exhibition - London, UK, 11-14 June 2007) discloses a continuous wavelet transform (CWT) for mapping potential channel deposits.

## Summary

The present invention relates to a computer-implemented method for constructing a seismic image of a subterranean formaiton according to claim 1, to a computing system according to claim 10 and to a non-transitory computer-readable medium according to claim 11.

Further aspects of the invention are set forth in the dependent claims.

## Brief Description of the Drawings

The accompanying drawings, which are incorporated in and constitute a part of this specification, illustrate embodiments of the present teachings and together with the description, serve to explain the principles of the present teachings.

Figure 1 illustrates a flowchart for a method for decomposing a (e.g., seismic) signal, according to an embodiment.
Figure 2 illustrates a seismic image showing a sedimentary channel, according to an embodiment.
Figure 3 illustrates a wavelet with an oscillating shape, according to an embodiment.
Figure 4 illustrates a family of wavelets including the wavelet shown in Figure 3, according to an embodiment.
Figure 5 illustrates a window function that may be applied to the wavelet shown in Figure 3, according to an embodiment.
Figure 6 illustrates a family of wavelets with a phase of zero degrees, according to an embodiment.
Figure 7 illustrates a family of wavelets with two cycles and a 90 degree phase shift, according to an embodiment.
Figure 8 illustrates the wavelet shown in Figure 3 after the wavelet has been scaled, according to an embodiment.
Figure 9 illustrates a family of wavelet shapes resulting from varying a cycle count, according to an embodiment.
Figure 10 illustrates a plot of time versus phase shift for the family of wavelets, according to an embodiment.
Figures 11-1, 11-2, and 11-3 illustrate enlarged views of the seismic image of Figure 2, according to an embodiment. In particular, Figure 11-1 illustrates the unmodified, enlarged view; Figure 11-2 illustrates the seismic image with the correlation between the traces in the left image with a wavelet of a 14 Hz center frequency, +90 degree phase rotation, and one cycle of the carrier signal; and Figure 11-3 illustrates the seismic image with the negative correlations removed.
Figures 12-1, 12-2, and 12-3 illustrate, respectively, the seismic input, the positive part of the correlation function, and the maximum filtering of the correlation function, according to an embodiment.
Figure 13-1 illustrates a time-slice through a maximum-filtered result, according to an embodiment.
Figure 13-2 illustrates a similar time-slice, but with the filter having different parameters, according to an embodiment.

Figures 14-1, 14-2, and 14-3 illustrate, respectively, the input seismic data, a band-pass result for the 14 Hz wavelet, and a result with the same 14 Hz input, but with four oscillations, according to an embodiment.

Figures 15-1, 15-2, and 15-3 illustrate, respectively, the seismic input, the result using an embodiment of the method of the present disclosure, and a result using an SWFT method, according to an embodiment.

Figures 16-1, 16-2, and 16-3 illustrate similar views as Figures 15-1, 15-2, and 15-3, respectively, but shown along a time-slice intersection, according to an embodiment.

Figures 17-1, 17-2, and 17-3 illustrate, respectively, another seismic input data, a view with a calculated 10 Hz response, and a view with a calculated 33 Hz response, according to an embodiment.

Figures 18-1, 18-2, and 18-3 illustrate views similar to Figures 17-1, 17-2, and 17-3, respectively, but with the method of the present disclosure being supplied with different parameters, according to an embodiment.

Figures 19-1, 19-2, and 19-3 also illustrate views similar to Figures 17-1, 17-2, and 17-3, respectively, but using an SWFT method, according to an embodiment.

Figures 20-1, 20-2, and 20-3 again illustrate views similar to Figures 17-1, 17-2, and 17-3, respectively, but with a maximum filter set to use a certain window length, according to an embodiment.

Figures 21-1, 21-2, and 21-3 again illustrate views similar to Figures 17-1, 17-2, and 17-3, respectively, but with different parameters used for the method, according to an embodiment.

Figure 22 illustrates a schematic view of a computing system, according to an embodiment.

**Detailed Description**

The following detailed description refers to the accompanying drawings. Wherever convenient, the same reference numbers are used in the drawings and the following description to refer to the same or similar parts. While several embodiments and features of the present disclosure are described herein, modifications, adaptations, and other implementations are possible, the scope of the invention being solely defined by the appended claims.

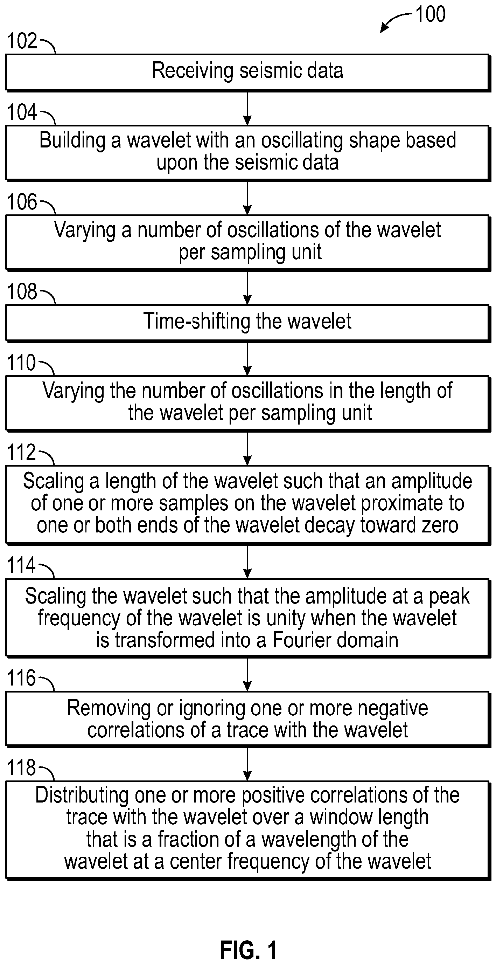

Figure 1 illustrates a flowchart of a method 100 for decomposing a signal, according to an embodiment. The method 100 allows a user to generate a wavelet with a flexible design that may be used for the filtering/decomposition of input seismic data. The method 100 is or includes a generalized spectral decomposition method, where the user has enhanced control of vertical resolution and/or frequency resolution. The method 100 includes a flexible and natural parameterization, which allows the user to design any wavelet shape in the continuum between SWFT and CWT. The use of the "scale" and "number of vanishing moments" parameter in the CWT transform may be avoided, and the wavelet may be defined based on three parameters: (1) frequency, (2) number of cycles, and (3) phase. The resulting raw wavelet may then be scaled such that the correlation of the scaled wavelet with itself (i.e., the auto-correlation) is unity (1.0).

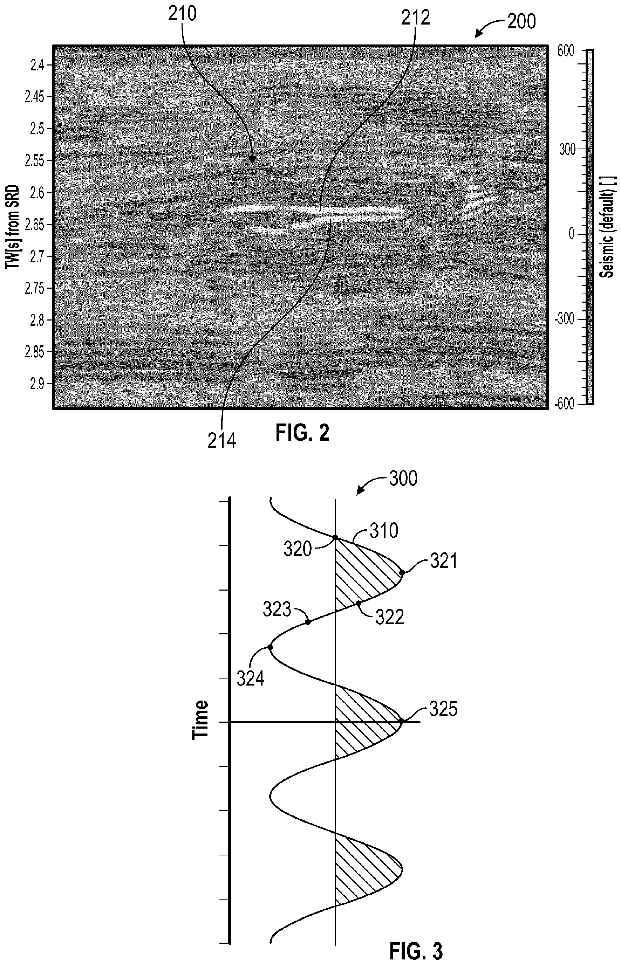

The method 100 is described in part with reference to Figures 2-22 and their corresponding descriptions below. Although Figures 2-22 and their corresponding descriptions reference a seismic signal, it will be appreciated that in other examples not forming part of the present invention, the method 100 may also be used for other types of signals such as medical imaging signals, satellite imaging signals, radar signals, and the like. The method 100 begins by receiving seismic data, as at 102. According to the invention, a sound vibration generated by a source reflects off horizons in the subterranean formation. A set of sound vibrations is received by one or more sensors, such as geophone-receivers, situated on the earth's surface. The data received may be provided as input data to a computer, and responsive to the input data, the computer may generate seismic data output. This seismic data output may be stored, transmitted or further processed as desired, for example, by data reduction.

One or more channels may be recorded in the seismic data. As used herein, a "channel" refers to a substantially linear depression through which water and sediment may flow and into which sediment may be deposited in distinctive (e.g., elongated) bodies.

Figure 2 illustrates an image 200 of seismic data including a sedimentary channel 210. One illustrative use for spectral decomposition may be channel detection. The channel 210 may have one or more strong reflectors 212 defining the top of the channel 210, and one or more trailing reflectors 214 with an opposite polarity, but similar amplitude (e.g., a sand channel surrounded by shale scenario). The polarity of the top and bottom reflectors 212, 214 may be known. This is given by the polarity standard for the seismic data at hand. For example, the polarity standard may be positive on top and negative on the bottom, although the opposite polarity may also exist. The distance in traveltime between the top and bottom reflectors 212, 214 (also referred to as interfaces) defines the "resonancy" frequency for the channel 210.

In the example of Figure 2, the distance between top and bottom reflectors 212, 214 is about 35 milliseconds, and the resonancy frequency for the channel 210 embedded between the two reflectors 212, 214 is 1000 / 2 *35 ms = 14 Hz. This means that the wavelet shape that correlates best with this channel body may be a wavelet kernel with central frequency of 14 Hz, and a phase of +90 degrees. As such, the method 100 may include building or constructing a wavelet (i.e., a time-series of sample values) in the shape of an array with an oscillating shape based upon the seismic data, as at 104 in Figure 1. For example, the shape of the wavelet may be similar or equal to a cosine wave. In at least one embodiment, the wavelet may be built based at least partially upon the channel 210 in the seismic data.

Figure 3 illustrates an image 300 of a wavelet 310 with an oscillating shape, according to an embodiment. The wavelet 310 may include a plurality of samples 320-325. As used herein, a "sample" or "sample value" refers to the amplitude of the wavelet 310. The x-axis represents time. The time may be measured in milliseconds or seconds. The y-axis may represent depth, distance, time, pixel, voxel, voter, etc. When the y-axis represents distance, the units may be meters, kilometers, light years, etc.

The method 100 may include varying a number of oscillations (i.e., frequency) of the wavelet per sampling unit, as at 106 in Figure 1. As used herein, a "sampling unit" refers to a unit of time (e.g., 1 second) for time-domain data. The number of oscillations for the wavelet 310 may influence how precisely channels (e.g., channel 210) of that particlar thickness may be mapped. As shown, the wavelet 310 is shown including three oscillations. Decreasing the number of oscillations may improve vertical localization (e.g., due to the short wavelet), but may not allow discrimination between different channel thicknesses. Increasing the number of oscillations may better isolate layers with the desired thickness, but may result in diminished lateral resolution (e.g., due to the longer wavelet and, hence, longer "zone of influence").

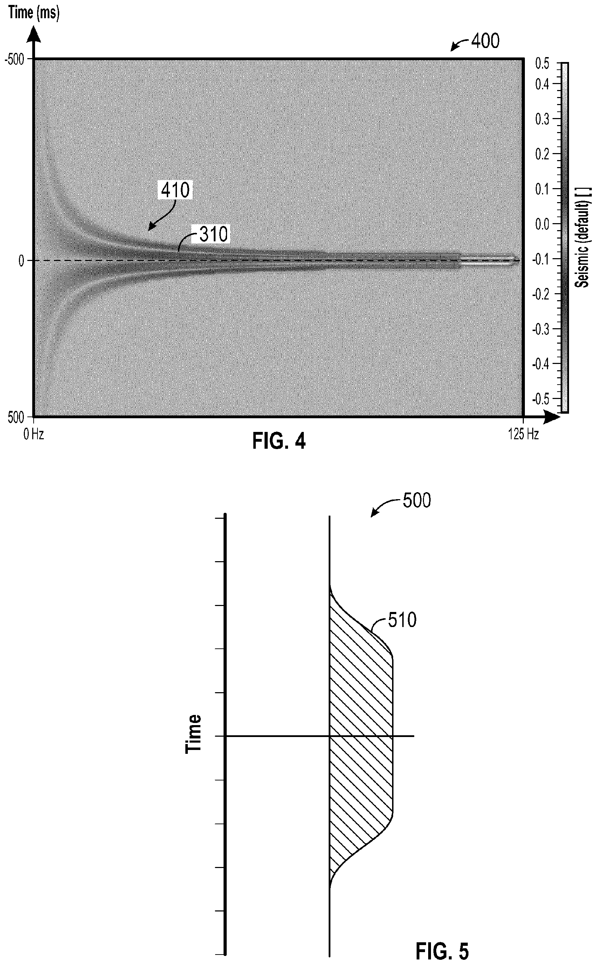

Figure 4 illustrates an image 400 showing a family of wavelets 410 including the wavelet 310 shown in Figure 3. Figures 3 and 4 appear different because Figure 3 is plotted in a "wiggle-plot" style while Figure 4 is plotted in "variable density" style, where grey-scale is used to indicate sample amplitude. In addition, Figure 3 shows a single wavelet 310 with three oscillations and a 0 degree phase shift, while Figure 4 shows a plurality of wavelets 410 with two oscillations and a 90 degree phase shift. In Figure 4, the horizontal axis separates the wavelets, and individual wavelets are rendered vertically. The family of wavelets 410 has a center frequency in the range from 1 to 125 Hz. The wavelets 410 are shown with a -90 degree phase shift and a length equal to two oscillations. As can be seen, the wavelets 410 are tapered. There are many suitable ways to taper the wavelets 410. For example, one way to taper the wavelets 410 is to apply a Hanning window function. For example, Figure 5 illustrates an image 500 of a window function 510 that may be applied to the wavelet 310. The oscillations may not be tapered. For example, the taper function may take effect at the start and the end of the center cycle.

The method 100 includes time-shifting one or more of the wavelets 410 (e.g., wavelet 310) to detect a spectral component with a peak located at a temporal offset (e.g., a time shift) from the analysis sample location, as at 108 in Figure 1. The amount of the time shift may be determined by the user. The time shift may occur before or after the number of oscillations is varied. The shift may be specified as a phase shift (e.g., with the units being degrees or radians).

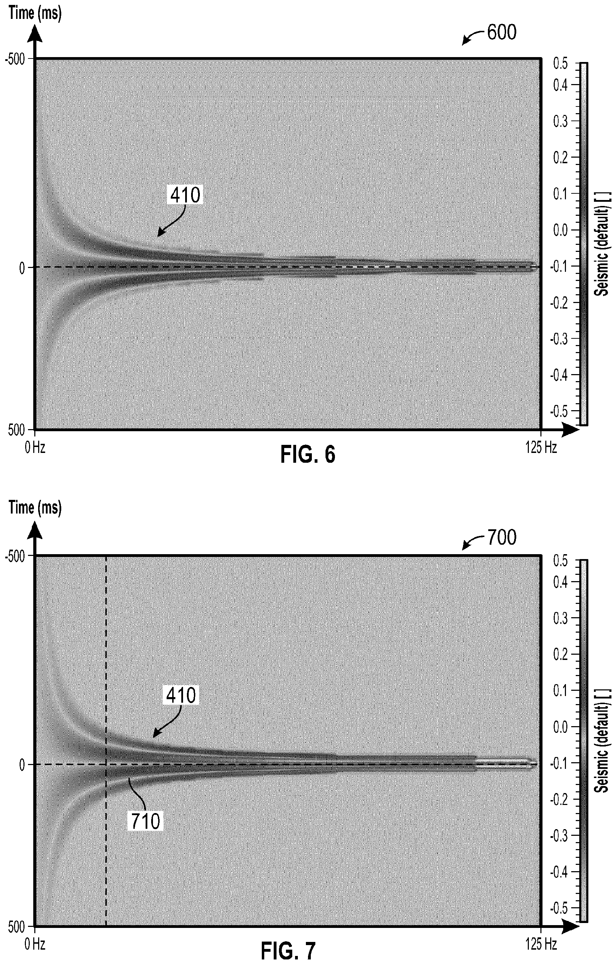

Figure 6 illustrates an image 600 showing the family of wavelets 410 shown in Figure 4, but with phase = 0 degrees, and Figure 7 illustrates an image 700 showing the family of wavelets 410 shown in Figure 4 having two cycles, but this time with a +90 degree phase shift. The crosshair cursor 710 points to the wavelet 310 (e.g., 14 Hz), which has a 35 millisecond distance between peak and trough, which may be used to detect the channel (e.g., channel 210 from Figure 2) through convolution with the seismic traces. As used herein, a "seismic trace" refers to the seismic data recorded for a channel (e.g., channel 210). The seismic trace represents the response of the elastic wavefield to velocity and density contrasts across interfaces of layers of rock or sediments as energy travels from a source through the subsurface to a receiver.

The method 100 may also include varying the number of oscillations in the length of the wavelet 310, as at 110 in Figure 1. The number of oscillations of the wavelet 310 may be varied by the user before or after the wavelet 310 is time-shifted.

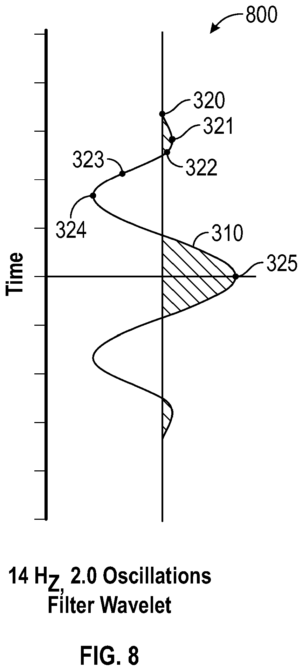

Figure 8 illustrates an image 800 of the wavelet 310 shown in Figure 3 after the wavelet 310 has been tapered (by the window function 510) and scaled, according to an embodiment. The method 100 also includes scaling the length of the wavelet 310 such that the amplitude of the samples proximate to the center (e.g., sample 525) remain substantially unaltered, and the amplitude of the samples proximate one or both ends of the wavelet 310 (e.g., samples 320-322) decay towards zero, as at 112 in Figure 1. The "center" refers to the sample on the wavelet 310 where time = 0. The method 100 also includes scaling the wavelet 310 such that an amplitude at a peak frequency of the wavelet 310 is substantially unity (i.e., 1.0) when the wavelet 310 is transformed into a Fourier domain, as at 114 in Figure 1.

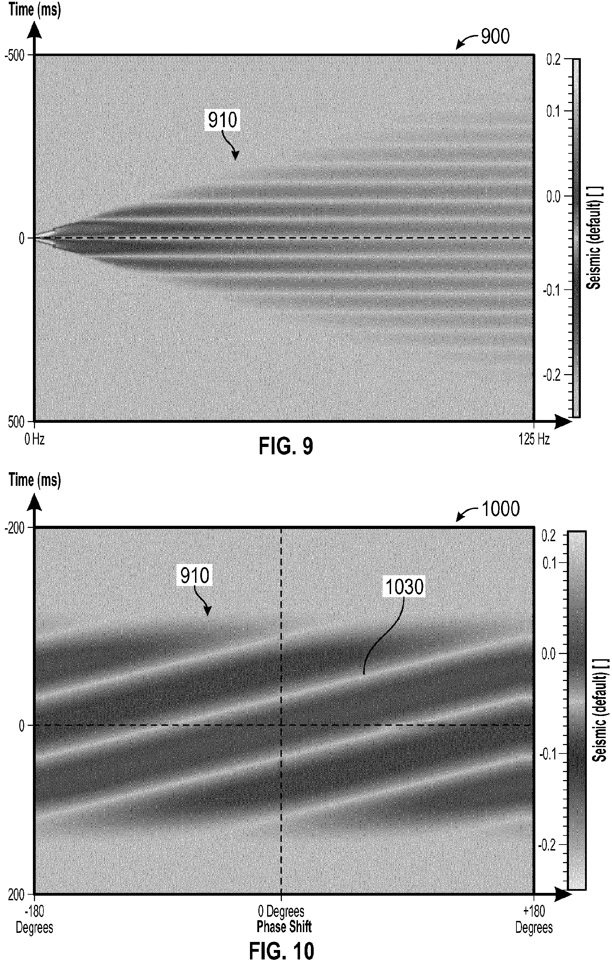

Figure 9 illustrates an image 900 showing the various shapes of wavelets 910 generated when the cycle count is varied from 0.0 to 10.0 cycles, but the center frequency remains constant at 10 Hz and the phase remains constant at +90 degrees. As will be appreciated, the number of cycles/oscillations may not be an integer value. Further, the wavelets 910 in this example may tapered with a Hanning window function, which may not taper the center cycle.

Figure 10 illustrates an image 1000 showing the wavelets 910 shown in Figure 9 with the phase parameter varied. The wavelet varies in shape when the phase is varies from -180 degrees (on the left in Figure 10) to +180 degrees (on the right in Figure 10). The cross-hair cursor 1030 identifies the location of the 0 degree phase wavelet.

The wavelet-shaping parameters may not be integer numbers. For example, fractional center frequencies, fractional phase shifts, and fractional number of oscillations/cycles may be employed or otherwise exist. Any of these values may be any real-valued number. This may also apply to max-filter window length parameters, as described below.

In some embodiments, the method 100 may then proceed to improving the vertical definition of the frequency response. The method 100 may accomplish this by removing or ignoring one or more negative correlations of the trace with the wavelet, as at 116 in Figure 1. This may facilitate discriminating between wanted and unwanted features in the seismic trace, as described in more detail below.

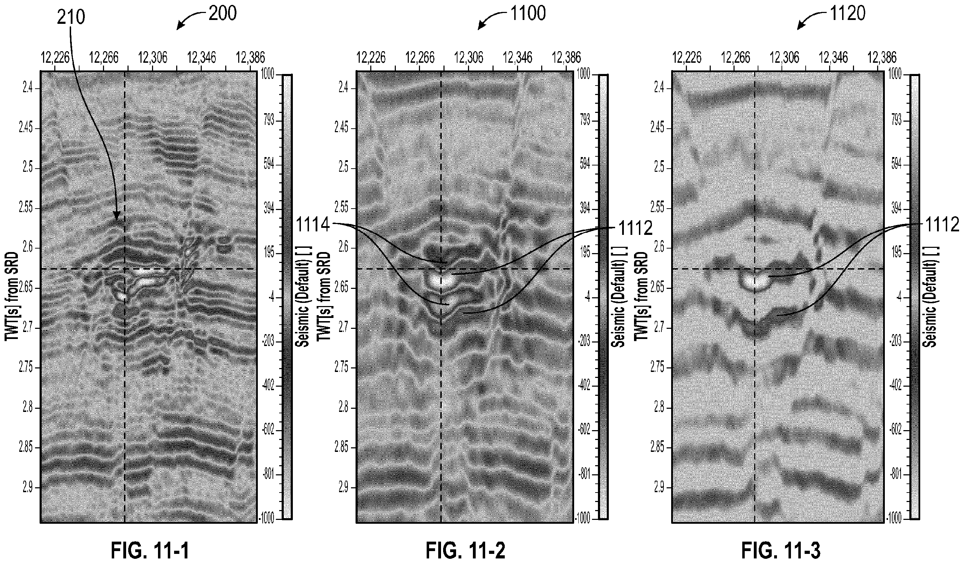

For example, Figure 11-1 illustrates the image 200 shown in Figure 2 including the channel 210, according to an embodiment. Figure 11-2 illustrates an image 1100 showing the correlations (e.g., positive correlations 1112 and negative correlations 1114) between the traces in Figure 11-1 with a wavelet with a 14 Hz center frequency, +90 degrees phase rotation, and one cycle of this 14Hz carrier signal. As shown in Figure 11-2, the channel 1110 may be well-defined with a positive correlation value 1112. However, there may also be a negative correlation 1114 immediately below. This may be caused by interference between the base of the channel 210 and a third reflector approximately 35 ms below the channel base.

This negative-positive response may not be of interest in this case, which may include searching for positive-negative reflector pairs. Thus, it may be useful to remove or ignore the negative correlations 1114, by setting those samples to zero. The result of ignoring the negative correlations 1114 is shown in the image 1120 in Figure 11-3. As can be appreciated, the channel section 1110 is well defined, and now is in a format that may be suitable for input to a "geobody" volume extraction.

Further, the positive part/lobe of the correlation function 1112 may be wide, and may almost cover the whole channel zone defined by the top and bottom reflectors. The thickness of the positive part/lobe of the correlation function 1112 may be determined based at least partially on the chosen center frequency, and the chosen number of oscillations, and thus may or may not span the whole channel window.

In some embodiments, the method 100 may proceed to distributing one or more positive correlations of the trace with the wavelet over a window length that is a fraction of a wavelength of the wavelet at a center frequency of the wavelet, as at 118 in Figure 1. In at least one embodiment, this may be accomplished by applying a max-function to the correlation function. The max-function may be applied to more than the positive part of the correlation function 1112, as the max-function may not honor negative correlation values 1114. As the term is used herein, "max-function" (or "max-filter") refers to a function which for each sample returns the maximum value within a user-defined radius. In one example, a window-length for the max-function may be equal to half the wavelength of the wavelet center frequency; however, any window length greater than or equal to 0.0 milliseconds may be used, in some embodiments, for this window size. However, the window-length for the max-function may be equal to any fraction of the wavelength of the wavelet center frequency. As used in this context, a "fraction" may be less than or greater than 1.0. For example, the fraction may be greater than 1.0 to highlight the largest correlation value within a long time interval.

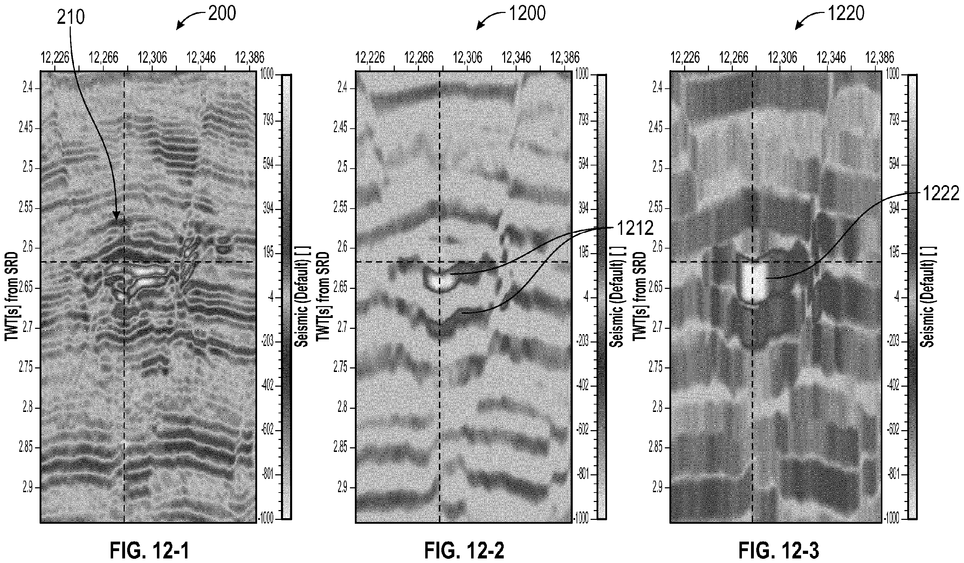

Figures 12-1, 12-2, and 12-3 illustrate images of the max-filter step for the channel 210 shown in Figure 2, with window length = 0.5 * wavelength = 35 milliseconds. Specifically, Figure 12-1 illustrates the image 200 shown in Figure 2, which may include the channel 210. Figure 12-2 illustrates an image 1200 showing a positive part of a correlation function 1212. Figure 12-3 illustrates an image 1220 showing a max-filtering of a correlation function 1222, with max-filter length = 1000 / 2 * Fcenter = 35 ms. As can be appreciated, the correlation response after max-filtering has almost the same thickness as the channel thickness that is being extracted and enhanced. Moreover, the max-response may be located in the center between the top and the base of the channel 210.

In addition to the max-filter, there are other filters that may also be employed for the same or generally similar purposes. For example, median-filtering of the positive part 1212, RMS of the positive part 1212, mean-filtering of the positive part 1212, and any other vertical filter (e.g., envelope filter) which may distribute the energy of the positive part of the correlation function 1212 over the desired window size (e.g., which by default may be 0.5 x wavelength).

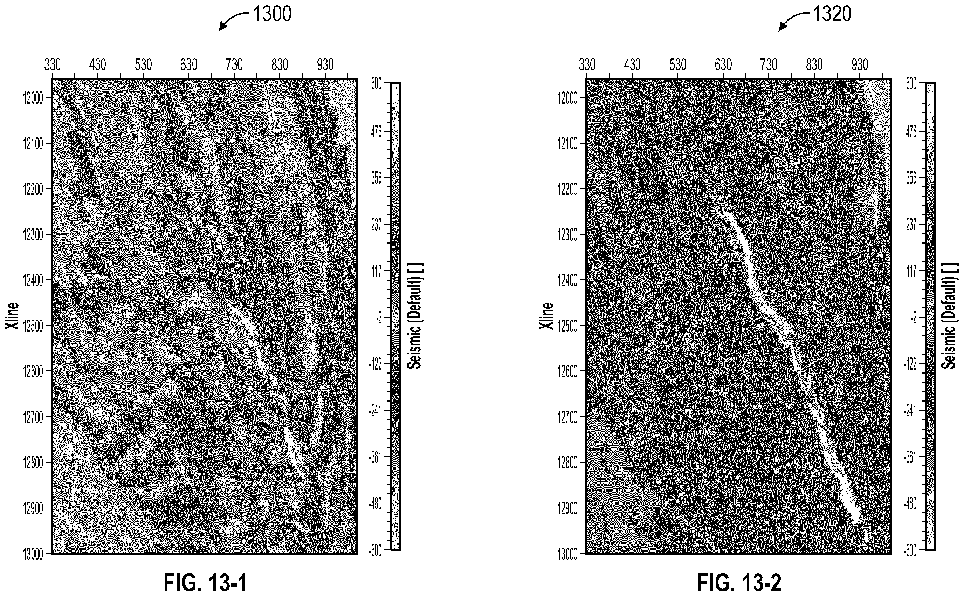

The max-window size may be substantially larger than the wavelength of the central frequency, as this may give the user the benefit of additional "depth of vision" when the result is displayed in time-slice mode. Figures 13-1 and 13-2 provide an illustrative example.

In particular, Figure 13-1 illustrates an image 1300 showing a time-slice through the max-filtered result, with window size equal to half the wavelength of the central frequency. The time-slice intersects parts of the channel. Figure 13-2 illustrates an image 1320 showing a similar result with a max-filter window of 2.5 times the wavelength (i.e. 2.5 x 70 milliseconds = ~170 milliseconds window size). The spatial location of the channel throughout the whole area may be seen, as this view is essentially looking deeper down into the strata. The exact vertical location of the channel may be smeared through this process because the channel may be at any vertical location within this fairly wide vertical window.

Three or more volumes with the same input wavelet may then be calculated, but with three different max-window sizes. These different volumes may have different levels of "depth vision," depending on their window size. Three of these volumes may then be co-rendered simultaneously in (e.g., a Red-Green-Blue (RGB) color-setup). The intensity of the three different colors may then represent the amplitude for the three different "depths of vision." If the three colors lit simultaneously, the channel/feature may be close to the time-slice. If the color with the largest "depth of vision" (i.e., largest max-window) lights up while the other colors do not, then the object may be far away from the slice. The max-filter length constant for the three cubes may then be input to the RGB blending, but with the samples shifted substantially down in the one cube (e.g., with a shift proportional to the max-window length), and the samples shifted substantially up (e.g., with a similar amount of shift) in the second cube. For example, the values shifted from above may be assigned to the Red channel, the un-shifted volume to the Green channel, and the values shifted from below to the Blue channel. When then co-rendered in the RGB scale, it may be determined whether the channel/feature/object is close to the time-slice intersection, or if it is above or below the time-slice intersection. This is not restricted to RGB blending. For example, other similar color mixing schemes (e.g., Hue-Saturation-Intensity blending, aka HSV) may also be used.

The method 100 includes performing a convolution of the trace and the wavelet discussed above (e.g., instead of performing a correlation). This may be useful to extract and highlight the part of the seismic data that triggers a positive response in the correlation. In essence, this becomes a band-pass filter, where the subset of the signal, which correlates with the chosen wavelet, is passed on to the output, and the other frequencies are attenuated. In this case, the wavelet uses a different normalization. The normalization is conducted in the frequency domain. That is, the raw wavelet is converted to the frequency domain through a Fourier transform, the amplitude spectrum calculated, and the maximum amplitude *Amax* in the amplitude spectrum may then be selected. The scaling factor s is then set to 1 / *Amax*. In another embodiment, the amplitude of the specified center frequency may be selected directly. This scaling factor ensures that the center-frequency part of the signal is not affected by the band-pass filter, while one or more other frequencies are attenuated.

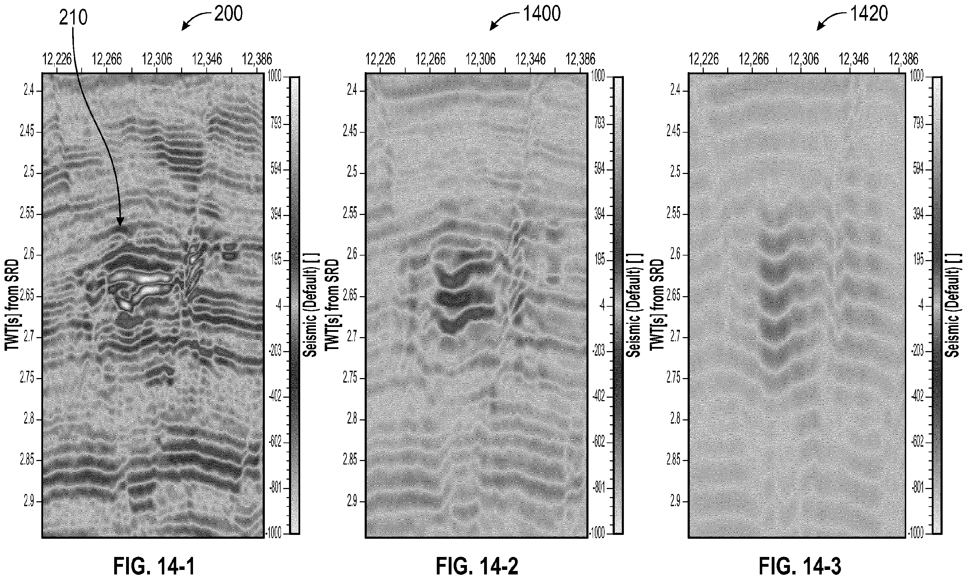

Figure 14-1 illustrates the image 200 shown in Figure 2 including the channel 210. Figure 14-2 illustrates an image 1400 showing the band-pass result for the 14 Hz, wavelet, and one full oscillation, but with the phase set to zero, in order to avoid phase rotation of the input seismic spectral component. Figure 14-3 illustrates an image 1420 showing the corresponding result with the same 14 Hz central frequency, but with four oscillations instead of one. The amplitude spectrum of the result may become more and more narrow as the wavelet length is increased (i.e., more cycles) and, hence, less energy is passed through the band-pass filter.

In at least one embodiment, the method 100 may also include performing a finite Fourier transform on the wavelet. The Fourier transform/decomposition, for a given frequency, is by definition just the correlation between the input signal and two infinite cosine sequences of the desired frequency, where the first sequence has a 0 degree phase rotation (the real part r), and the second sequence has a +90 degree phase rotation (the imaginary part i).

The amplitude response $\alpha$ of the frequency is:

$$a = SQRT(r^2 + i^2)$$

and the phase response p of the frequency is:

$$p = inverse \; sin \; (\; i \, / \, a \;)$$

A finite Fourier transform may be implemented, which belongs in the family of SWFT spectral decomposition methods, using the wavelets generated above. This time, however, the correlation may be performed twice, and the second correlation may be done using the same wavelet as in the first correlation, but with a 90 degree phase shift applied. The amplitude response and phase response may then be calculated according to the equations listed above.

## Example Results

This section contains some examples of comparisons between results from SWFT and the Generalized Spectral Decomposition (GSD) method, according to an embodiment.

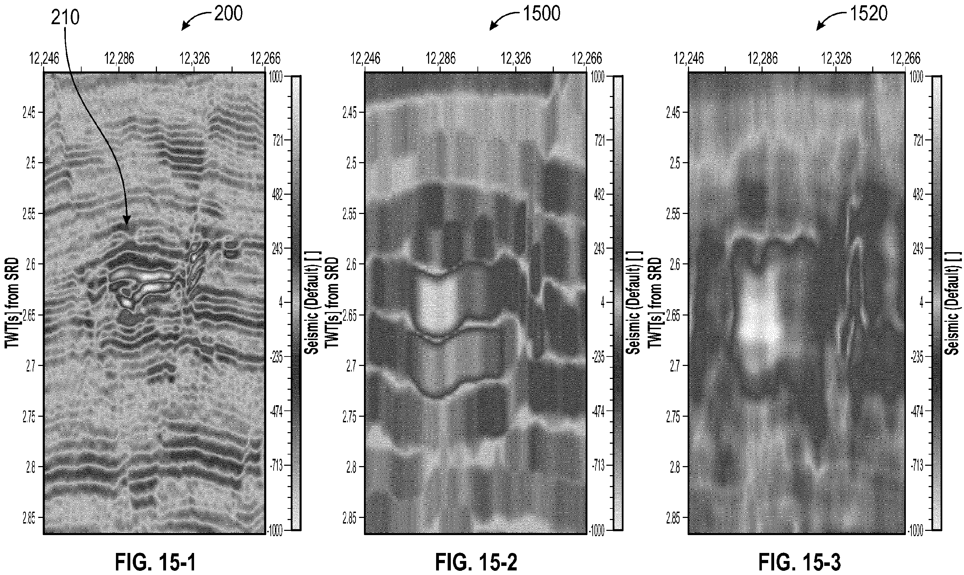

Figure 15-1 illustrates image 200 shown in in Figure 2 including the channel 210; Figure 15-2 illustrates an image 1500 showing the result from an embodiment of the present method 100 (e.g., using 14 Hz corner frequency, +90 degree phase shift, 2 cycles/140 millisecond wavelet length); and Figure 15-3 illustrates an image 1520 showing the result using the SWFT method (14 Hz center frequency, 128 ms/32 samples window length, the shortest window length practically possible with this method). As may be seen, more well-separated layer responses are generated with the present method 100 (Figure 15-2), at least partially because the method 100 is parameterized to focus on the presence of a positive-negative interface combination. The SWFT method is unable to discriminate between a positive-negative sequence and a negative-positive sequence, unless the phase spectrum is also included in the analysis.

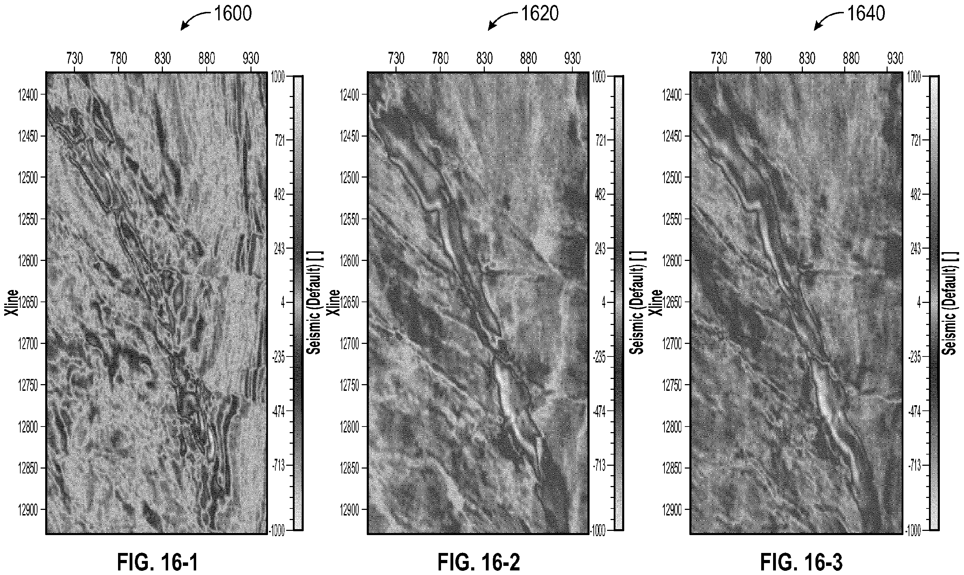

Figures 16-1, 16-2, and 16-3 illustrate images 1600, 1620, 1640 showing the same data as in Figures 15-1, 15-2, 15-3, respectively, but displayed along a time-slice intersection. There is somewhat less energy in the GSD approach, when compared to the SWFT result, due to better focusing on the positive-negative interface sequence.

In this example, almost equal window lengths are used for the two experiments, in order to do a fair comparison. Embodiments of the present method 100 (Figure 16-2) may facilitate moving towards shorter window lengths, on a scale comparable to classic CWT methods, while the SWFT method (Figure 16-3) is not efficient for window sizes below 32 samples (the next window length further down is a 16 sample window length, if the method is implemented with the classic FFT method).

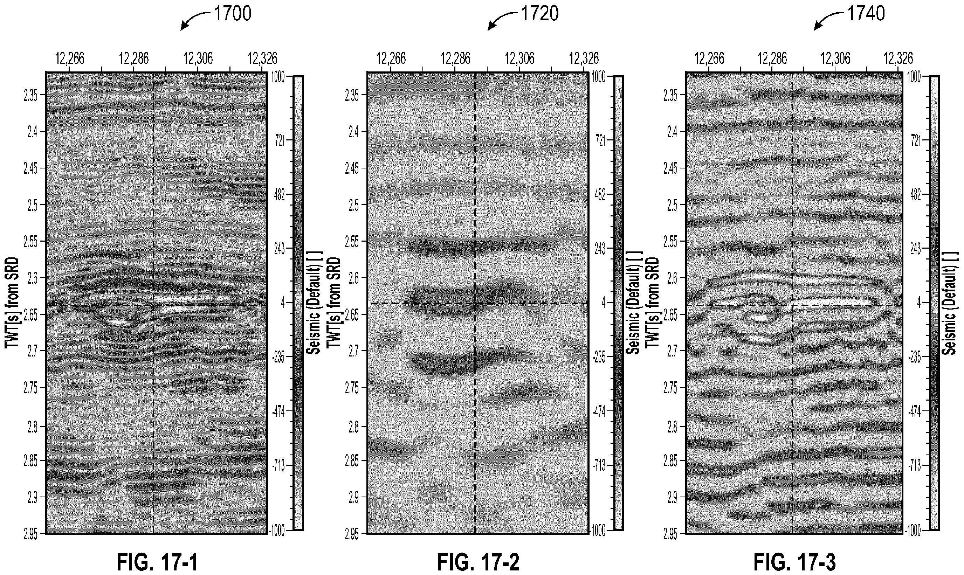

Figures 17-1, 17-2, and 17-3 illustrate images 1700, 1720, 1740 showing the channel mainly consisting of a thick central part, but with substantially thinner "wings." The peak-troff distance for the wings is approximately 15 milli-seconds, implying a resonancy frequency of close to 33 Hz. Calculating the 10 Hz response (in Figure 17-2) and the 33 Hz response (in Figure 17-3), both the wings and the thicker central part may be clearly detected. The thick central part may also be isolated in the 10 Hz component, with minimal leaked response from the wings. The same applies for the 33 Hz component, which captures the the the thin positive-negative sequences, and fully ignores the thick central part.

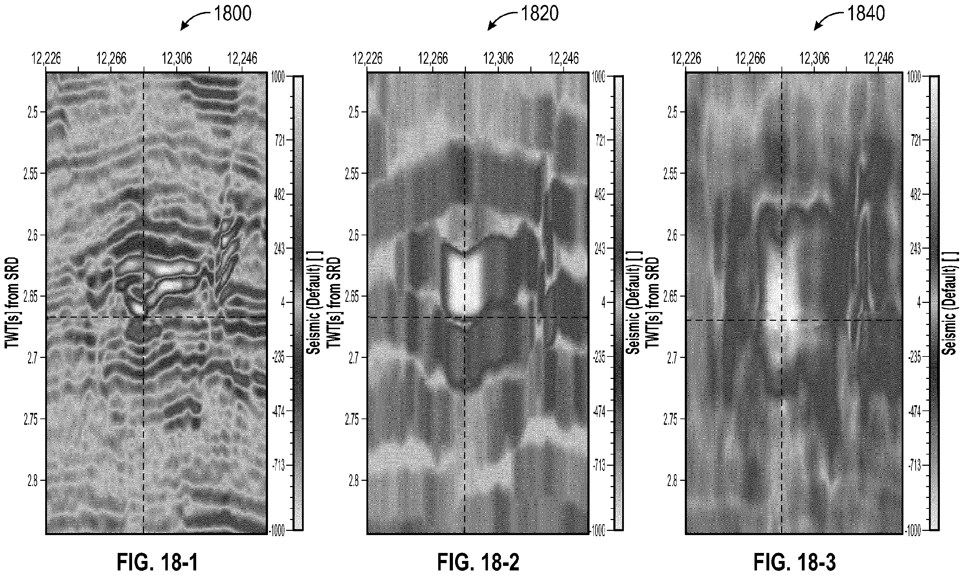

Figures 18-1, 18-2, and 18-3 illustrate images 1800, 1820, 1840 showing the same data shown in Figures 17-1, 17-2, and 17-3, respectively. However, the GSD method in the Figure 18-2 this time is run with a 1.0 oscillation/70 millisecond/17 sample window length. As shown, the later lateral resolution in Figure 18-2 is improved compared to the SWFT result (Figure 18-3).

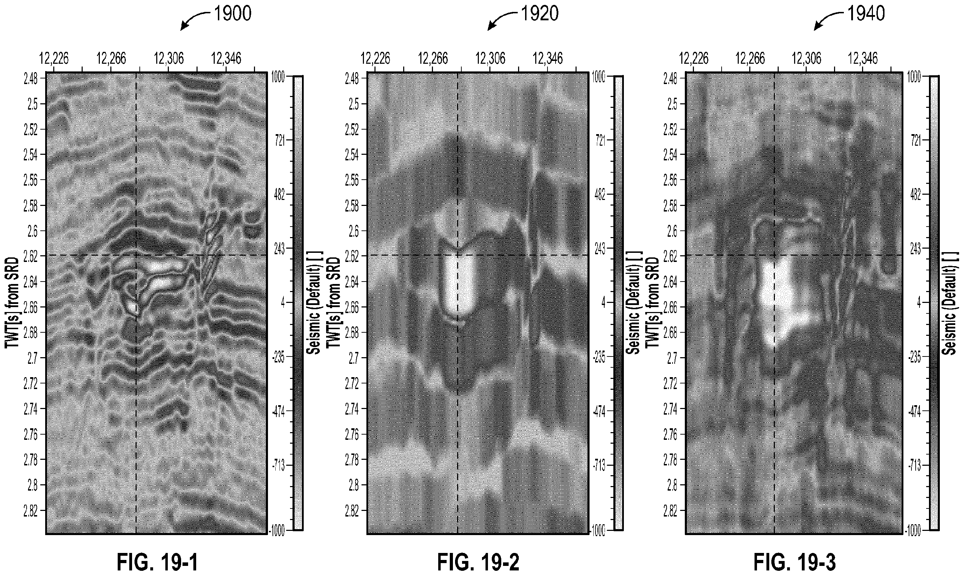

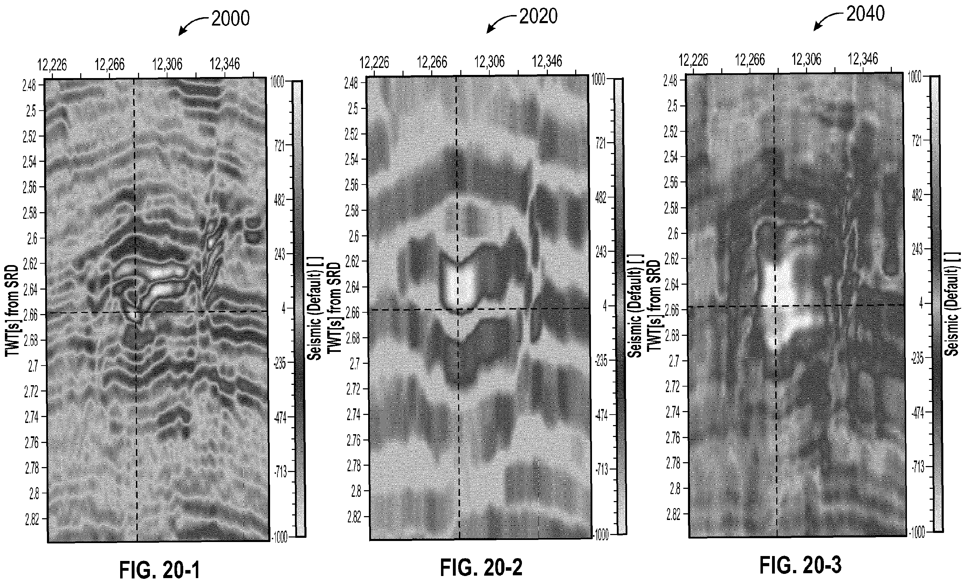

Figures 19-1, 19-2, and 19-3 illustrate images 1900, 1920, 1940 showing the same data shown in Figures 18-1, 18-2, and 18-3, respectively, but with a 70 millisecond/17 sample SWFT method. Figures 20-1, 20-2, and 20-3 illustrate images 2000, 2020, 2040 showing yet more views of the same data, but with a max-filter set to use a window length equal to 0.3 times the wavelength (i.e., approx. 20 milli-seconds). Better focusing may be seen on the desired channel body, when compared to the (very-short-windowed) SWFT method.

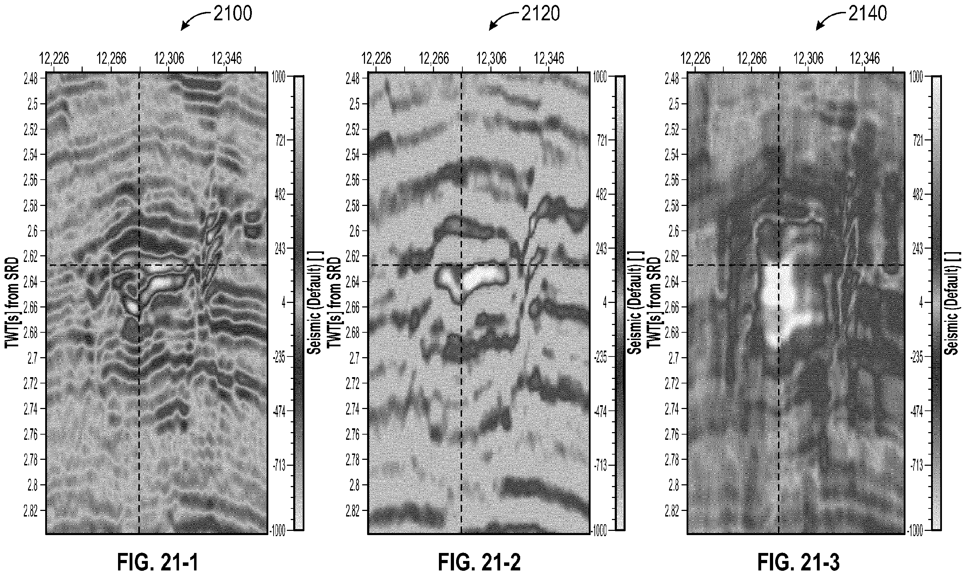

Figures 21-1, 21-2, and 21-3 illustrate images 2100, 2120, 2140 showing more views of the same data, but with the GSD method run with a 0.5 oscillations/35 milliseconds/9 sample window length, and with no applied max filtering. The mapping the channel appears more effective when compared to the short-windowed SWFT method. This very short window length for the GSD method is way below practical wavelet lengths for the CWT method.

The images resulting from the use of the method 100 may provide a better understanding of the subterranean formation. For example, the images may indicate a likelihood of a presence of hydrocarbons in the subterranean formation. As a result, in response to viewing the images, the user may decide whether or not to drill a wellbore in a certain location in search of hydrocarbons.

Attention is now directed to processing procedures, methods, techniques and workflows that are in accordance with some embodiments. Some operations in the processing procedures, methods, techniques and workflows disclosed herein may be combined and/or the order of some operations may be changed.

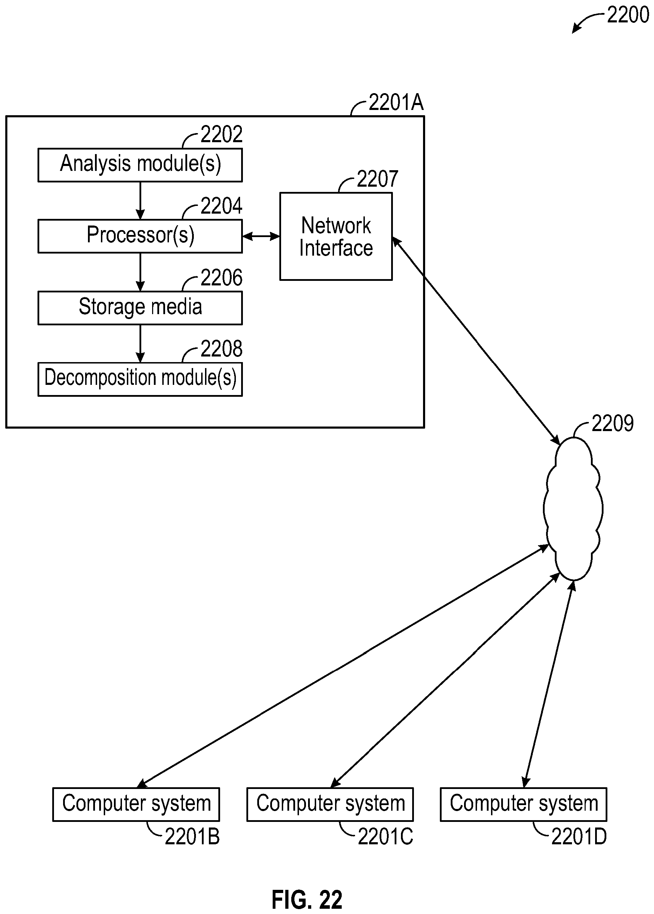

The methods of the present disclosure are executed by a computing system. Figure 22 illustrates an example of such a computing system 2200, in accordance with some embodiments. The computing system 2200 may include a computer or computer system 2201A, which may be an individual computer system 2201A or an arrangement of distributed computer systems. The computer system 2201A includes one or more analysis modules 2202 that are configured to perform various tasks according to some embodiments, such as one or more methods (e.g., method 100) disclosed herein. To perform these various tasks, the analysis module 2202 executes independently, or in coordination with, one or more processors 2204, which is (or are) connected to one or more storage media 2206A. The processor(s) 2204 is (or are) also connected to a network interface 2207 to allow the computer system 2201A to communicate over a data network 2209 with one or more additional computer systems and/or computing systems, such as 2201B, 2201C, and/or 2201D (note that computer systems 2201B, 2201C and/or 2201D may or may not share the same architecture as computer system 2201A, and may be located in different physical locations, e.g., computer systems 2201A and 2201B may be located in a processing facility, while in communication with one or more computer systems such as 2201C and/or 2201D that are located in one or more data centers, and/or located in varying countries on different continents).

A processor can include a microprocessor, microcontroller, processor module or subsystem, programmable integrated circuit, programmable gate array, or another control or computing device.

The storage media 2206 can be implemented as one or more computer-readable or machine-readable storage media. Note that while in the example embodiment of Figure 22 storage media 2206 is depicted as within computer system 2201A, in some embodiments, storage media 2206 may be distributed within and/or across multiple internal and/or external enclosures of computing system 2201 and/or additional computing systems. Storage media 2206 may include one or more different forms of memory including semiconductor memory devices such as dynamic or static random access memories (DRAMs or SRAMs), erasable and programmable read-only memories (EPROMs), electrically erasable and programmable read-only memories (EEPROMs) and flash memories, magnetic disks such as fixed, floppy and removable disks, other magnetic media including tape, optical media such as compact disks (CDs) or digital video disks (DVDs), BLUERAY® disks, or other types of optical storage, or other types of storage devices. Note that the instructions discussed above can be provided on one computer-readable or machine-readable storage medium, or in other embodiments, can be provided on multiple computer-readable or machine-readable storage media distributed in a large system having possibly plural nodes. Such computer-readable or machine-readable storage medium or media is (are) considered to be part of an article (or article of manufacture). An article or article of manufacture can refer to any manufactured single component or multiple components. The storage medium or media can be located either in the machine running the machine-readable instructions, or located at a remote site from which machine-readable instructions can be downloaded over a network for execution.

In some embodiments, the computing system 2200 may include one or more decomposition modules 2208 that may preform at least part of the method 100. It should be appreciated that computing system 2200 is one example of a computing system, and that computing system 2200 may have more or fewer components than shown, may combine additional components not depicted in the example embodiment of Figure 22, and/or computing system 2200 may have a different configuration or arrangement of the components depicted in Figure 22. The various components shown in Figure 22 may be implemented in hardware, software, or a combination of both hardware and software, including one or more signal processing and/or application specific integrated circuits.

Further, aspects of the processing methods described herein may be implemented by running one or more functional modules in information processing apparatus such as general purpose processors or application specific chips, such as ASICs, FPGAs, PLDs, or other appropriate devices.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. Moreover, the order in which the elements of the methods described herein are illustrate and described may be rearranged, and/or two or more elements may occur simultaneously. The embodiments were chosen and described in order to explain the principals of the invention and its practical applications, to thereby enable others skilled in the art to utilize the invention and various embodiments with various modifications are suited to the particular use contemplated. The scope of the invention is solely defined by the appended claims.

**Claims**

1. A computer-implemented method (100) for constructing a seismic image (200) of a subterranean formation, comprising:

    receiving (102) seismic data obtained by a sensor in response to a sound vibration generated by a source that reflects off of horizons in a subterranean formation;
    building (104) a wavelet in a time domain using the seismic data, wherein the wavelet includes a number of oscillations per sampling unit, and wherein a length of the wavelet corresponds to the number of oscillations;
    time-shifting (108) the wavelet;
    scaling (112) the length of the wavelet after time-shifting the wavelet such that an amplitude on one or more samples of the wavelet proximate the center remains substantially unaltered and the amplitude of the samples proximate one or both ends of the wavelet decay toward zero;
    performing a Fourier transform on the wavelet to transform the wavelet from the time domain into the frequency domain;
    scaling (114) the wavelet such that a peak amplitude of the wavelet, when transformed into the frequency domain, is substantially unity;
    convolving the wavelet with a trace of the seismic data; and
    generating the seismic image (200) of the subterranean formation based at least partially upon the wavelet.

2. The method (100) of claim 1, further comprising varying (106) the number of oscillations per sampling unit.

3. The method (100) of any of the preceding claims, wherein a channel is recorded in the seismic data, and wherein building (104) the wavelet further comprises building (104) the wavelet at least partially based upon the channel.

4. The method (100) of claim 2, further comprising removing (116) one or more negative correlations of a trace with the wavelet, wherein the trace comprises the sampled data recorded for the channel.

5. The method (100) of claim 4, wherein the wavelet comprises a plurality of samples, and wherein the one or more negative correlations are removed (116) by setting values for one or more of the samples to zero.

6. The method (100) of claim 4, further comprising distributing (118) one or more positive correlations of the trace with the wavelet over a window length that is a fraction of a wavelength of the wavelet at a center frequency of the wavelet.

7. The method (100) of claim 6, wherein distributing (118) the positive correlations of the trace with the wavelet comprises applying a filter that distributes energy of the positive correlations over the window length.

8. The method (100) of claim 7, wherein the filter is selected from the group consisting of a max filter, a median filter, a root mean square filter, a mean filter, and an envelope filter.

9. The method (100) of any of the preceding claims, further comprising drilling a wellbore into a subterranean formation in response to the wavelet indicating a likelihood of hydrocarbons in the subterranean formation.

10. A computing system (2201A-2201D) comprising:

one or more processors (2204); and
a memory system comprising one or more non-transitory computer-readable media (2206) storing instructions that, when executed by at least one of the one or more processors (2204), cause the computing system (2201A-2201D) to perform the method (100) according to any one of the preceding claims.

11. A non-transitory computer-readable medium (2206) storing instructions that, when executed by at least one processor (2204) of a computing system (2201A-2201D), cause the computing system (2201A-2201D) to perform the method (100) according to any one of the claims 1-9.

## Patentansprüche

1. Rechnerimplementiertes Verfahren (100) zum Konstruieren eines seismischen Bildes (200) einer Untergrundformation, umfassend:

Empfangen (102) seismischer Daten, die von einem Sensor als Reaktion auf eine Schallvibration erhalten werden, die von einer an Horizonten in einer Untergrundformation reflektierten Quelle erzeugt wird;
Aufbauen (104) eines Wellenzugs in einem Zeitbereich unter Verwendung der seismischen Daten, wobei der Wellenzug eine Anzahl von Oszillationen pro Abtastungseinheit umfasst, und wobei eine Länge des Wellenzugs der Anzahl von Oszillationen entspricht;
Zeitverschieben (108) des Wellenzugs;
Skalieren (112) der Länge des Wellenzugs nach dem Zeitverschieben des Wellenzugs, so dass eine Amplitude an einer oder mehreren Abtastungen des Wellenzugs nahe der Mitte im Wesentlichen unverändert bleibt und die Amplitude der Abtastungen nahe einem oder beiden Enden des Wellenzugs gegen Null abklingt;
Durchführen einer Fouriertransformation mit dem Wellenzug, um den Wellenzug vom Zeitbereich in den Frequenzbereich zu transformieren;
Skalieren (114) des Wellenzugs, so dass eine Spitzenamplitude des Wellenzugs, bei Transformation in den Frequenzbereich, im Wesentlichen Eins ist;
Falten des Wellenzugs mit einer Spur der seismischen Daten; und
Erzeugen des seismischen Bildes (200) der Untergrundformation basierend wenigstens teilweise auf dem Wellenzug.

2. Verfahren (100) nach Anspruch 1, ferner umfassend Variieren (106) der Anzahl von Oszillationen pro Abtasteinheit.

3. Verfahren (100) nach einem der vorhergehenden Ansprüche, wobei in den seismischen Daten ein Kanal aufgezeichnet wird, und wobei das Aufbauen (104) des Wellenzugs ferner ein Aufbauen (104) des Wellenzugs wenigstens teilweise basierend auf dem Kanal umfasst.

4. Verfahren (100) nach Anspruch 2, ferner umfassend Entfernen (116) einer oder mehrerer negativer Korrelationen einer Spur mit dem Wellenzug, wobei die Spur die für den Kanal aufgezeichneten abgetasteten Daten umfasst.

5. Verfahren (100) nach Anspruch 4, wobei der Wellenzug mehrere Abtastungen umfasst, und wobei die eine oder die mehreren negativen Korrelationen durch Setzen von Werten für eine oder mehrere der Abtastungen auf Null entfernt (116) werden.

6. Verfahren (100) nach Anspruch 4, ferner umfassend Verteilen (118) einer oder mehrerer positiver Korrelationen der Spur mit dem Wellenzug über eine Fensterlänge, die ein Bruchteil einer Wellenlänge des Wellenzugs bei einer Mittenfrequenz des Wellenzugs ist.

7. Verfahren (100) nach Anspruch 6, wobei das Verteilen (118) der positiven Korrelationen der Spur mit dem Wellenzug ein Anwenden eines Filters umfasst, das Energie der positiven Korrelationen über die Fensterlänge verteilt.

8. Verfahren (100) nach Anspruch 7, wobei das Filter ausgewählt wird aus der Gruppe bestehend aus einem Max-Filter, einem Median-Filter, einem Effektivwert-Filter, einem Mittelwert-Filter und einem Hüllkurven-Filter.

9. Verfahren (100) nach einem der vorhergehenden Ansprüche, ferner umfassend Abteufen eines Bohrlochs in eine Untergrundformation als Reaktion darauf, dass der Wellenzug eine Wahrscheinlichkeit von Kohlenwasserstoffen in der Untergrundformation anzeigt.

10. Rechensystem (2201A-2201D), umfassend:

einen oder mehrere Prozessoren (2204); und
ein Speichersystem, das ein oder mehrere nichtflüchtige rechnerlesbare Medien (2206) umfasst, die Anweisungen speichern, welche, wenn sie von wenigstens einem des einen oder der mehreren Prozessoren (2204) ausgeführt werden, bewirken, dass das Rechensystem (2201A-2201D) das Verfahren (100) gemäß einem der vorhergehenden Ansprüche ausführt.

11. Nichtflüchtiges rechnerlesbares Medium (2206), das Anweisungen speichert, die, wenn sie von wenigstens einem Prozessor (2204) eines Rechensystems (2201A-2201D) ausgeführt werden, bewirken, dass das Rechensystem (2201A-2201D) das Verfahren (100) gemäß einem der Ansprüche 1-9 ausführt.

**Revendications**

1. Procédé de mise en oeuvre par ordinateur (100) destiné à construire une image sismique (200) d'une formation souterraine, comprenant :

la réception (102) de données sismiques obtenues par un capteur en réponse à une vibration sonore générée par une source qui se réfléchit sur les horizons d'une formation souterraine ; la construction (104) d'une ondelette dans un domaine temporel à l'aide des données sismiques, l'ondelette comportant un certain nombre d'oscillations par unité d'échantillonnage et la longueur de l'ondelette correspondant au nombre d'oscillations ; le décalage temporel (108) de l'ondelette ; la mise à l'échelle (112) de la longueur de l'ondelette après le décalage temporel de l'ondelette de sorte qu'une amplitude sur un ou plusieurs échantillons de l'ondelette à proximité du centre reste sensiblement inchangée et que l'amplitude des échantillons à proximité d'une ou des deux extrémités de l'ondelette décroît vers zéro ; la réalisation d'une transformée de Fourier sur l'ondelette pour transformer l'ondelette du domaine temporel au domaine fréquentiel ; la mise à l'échelle (114) de l'ondelette de sorte que l'amplitude de crête de l'ondelette, lorsqu'elle est transformée dans le domaine fréquentiel, soit sensiblement égale à l'unité ; la convolution de l'ondelette avec une trace des données sismiques ; et la génération de l'image sismique (200) de la formation souterraine basée au moins partiellement sur l'ondelette.

2. Procédé (100) selon la revendication 1, comprenant en outre la variation (106) du nombre d'oscillations par unité d'échantillonnage.

3. Procédé (100) selon l'une quelconque des revendications précédentes, dans lequel un canal est enregistré dans les données sismiques et dans lequel la construction (104) de l'ondelette comprend en outre la construction (104) de l'ondelette basée au moins en partie sur le canal.

4. Procédé (100) selon la revendication 2, comprenant en outre l'élimination (116) d'une ou plusieurs corrélations négatives d'une trace avec l'ondelette, la trace comprenant les données échantillonnées enregistrées pour le canal.

5. Procédé (100) selon la revendication 4, dans lequel l'ondelette comprend une pluralité d'échantillons, et dans lequel la ou les corrélations négatives sont éliminées (116) en mettant à zéro les valeurs d'un ou plusieurs des échantillons.

6. Procédé (100) selon la revendication 4, comprenant en outre la distribution (118) d'une ou plusieurs corrélations positives de la trace avec l'ondelette sur une longueur de fenêtre qui est une fraction d'une longueur d'onde de l'ondelette à une fréquence centrale de l'ondelette.

7. Procédé (100) selon la revendication 6, dans lequel la distribution (118) des corrélations positives de la trace avec l'ondelette comprend l'application d'un filtre qui distribue l'énergie des corrélations positives sur la longueur de la fenêtre.

8. Procédé (100) selon la revendication 7, dans lequel le filtre est choisi dans le groupe constitué d'un filtre maximal, d'un filtre médian, d'un filtre racine carrée moyenne, d'un filtre moyen et d'un filtre d'enveloppe.

9. Procédé (100) selon l'une des revendications précédentes, comprenant en outre le forage d'un puits de forage dans une formation souterraine en réponse à l'ondelette indiquant une probabilité de présence d'hydrocarbures dans la formation souterraine.

10. Système informatique (2201A-2201D) comprenant :

un ou plusieurs processeurs (2204) ; et un système de mémoire comprenant un ou plusieurs instructions de mémorisation de supports non transitoires lisibles par ordinateur (2206) qui, lorsqu'elles sont exécutées par au moins un parmi le ou les processeurs (2204), amènent le système informatique (2201A-2201D) à réaliser le procédé (100) selon l'une quelconque des revendications précédentes.

11. Instructions de mémorisation du support non transitoire lisible par ordinateur (2206) qui, lorsqu'elles sont exécutées par au moins un processeur (2204) d'un système informatique (2201A-2201D), amènent le système informatique (2201A-2201D) à réaliser le procédé (100) selon l'une quelconque des revendications 1 à 9.

FIG. 1

FIG. 2

FIG. 3

FIG. 4

FIG. 5

FIG. 6

FIG. 7

14 H$_Z$, 2.0 Oscillations
Filter Wavelet

FIG. 8

**FIG. 9**

**FIG. 10**

FIG. 11-1

FIG. 11-2

FIG. 11-3

FIG. 12-1

FIG. 12-2

FIG. 12-3

EP 2 952 935 B1

FIG. 13-2

FIG. 13-1

**FIG. 14-1**  **FIG. 14-2**  **FIG. 14-3**

FIG. 15-1

FIG. 15-2

FIG. 15-3

FIG. 16-3

FIG. 16-2

FIG. 16-1

23

**FIG. 17-1**  **FIG. 17-2**  **FIG. 17-3**

FIG. 18-1

FIG. 18-2

FIG. 18-3

FIG. 19-1

FIG. 19-2

FIG. 19-3

EP 2 952 935 B1

FIG. 20-1          FIG. 20-2          FIG. 20-3

FIG. 21-1

FIG. 21-2

FIG. 21-3

EP 2 952 935 B1

2200

2201A

2202
Analysis module(s)

2204
Processor(s)

2207
Network Interface

2206
Storage media

2208
Decomposition module(s)

2209

Computer system
2201B

Computer system
2201C

Computer system
2201D

FIG. 22

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H. KAZEMEINI ; C. JUHLIN ; K. ZINCK-JORGENSEN ; B. NORDEN.** Application of the Continuous Wavelet Transform Decomposition to Channel Deposits and Gas Detection at Ketzin, Germany. *EAGE 69th Conference and Exhibition,* 11 June 2007